# EUROPÄISCHE PATENTSCHRIFT

(11) **EP 1 339 545 B1**
(45) Veröffentlichungstag und Bekanntmachung des Hinweises auf die Patenterteilung: **21.07.2004**
(21) Anmeldenummer: 01984794.6
(22) Anmeldetag: 30.11.2001
(51) Int. Cl.: B32B 27/04, B32B 27/20, B32B 29/00, B28B 3/00, B44C 5/04, C09K 3/14

(54) **VERSCHLEISSSCHUTZSCHICHT AUF BASIS VON KUNSTHARZ, VERFAHREN ZUR IHRER HERSTELLUNG SOWIE IHRE VERWENDUNG**
PROTECTIVE LAYER AGAINST WEAR BASED ON ARTIFICIAL RESIN, METHOD FOR THE PRODUCTION THEREOF AND USE OF THE SAME
COUCHE DE PROTECTION CONTRE L'USURE A BASE DE RESINE SYNTHETIQUE, SON PROCEDE DE PRODUCTION ET SON UTILISATION

(30) Priorität: 08.12.2000 DE 10061497
(43) Veröffentlichungstag der Anmeldung: 03.09.2003
(73) Patentinhaber: Treibacher Schleifmittel GmbH, 79725 Laufenburg (DE)
(72) Erfinder: KUNZ, Reiner, 79725 Laufenburg (DE)
(74) Vertreter: Neunert, Peter Andreas
(86) Internationale Anmeldenummer: PCT/EP2001/014028
(87) Internationale Veröffentlichungsnummer: WO 2002/045955

(56) Entgegenhaltungen:
- EP-A- 0 472 036
- US-A- 6 106 654
- PATENT ABSTRACTS OF JAPAN & JP 2001 030435 A (DAINIPPON PRINTING), 6. Februar 2001 (2001-02-06)

## Beschreibung

Verschleißschutzschicht auf Basis von Kunstharz, Verfahren zur ihrer Herstellung sowie ihre Verwendung.

Gegenstand der vorliegenden Erfindung ist eine Verschleißschutzschicht auf Basis von Kunstharz mit eingelagerten Hartstoffpartikeln gemäß Oberbegriff des Anspruchs 1. Gegenstand der vorliegenden Erfindung ist weiterhin ein Verfahren zu ihrer Herstellung sowie ihre Verwendung.

Es ist allgemein bekannt, dass den Oberflächen von Möbeln, Fußböden etc. durch das Aufbringen von sogenannten Laminaten, die aus einem Dekorpapier und eventuell weiteren übereinander liegenden Papieren bestehen, die mit einem hitzehärtbaren Kunstharz imprägniert sind, ein dekoratives Aussehen verliehen werden kann. Die Imprägnierung dient vor allem dazu, die Empfindlichkeit der Oberfläche gegenüber mechanischer, thermischer und chemischer Beanspruchung (z.B. Abrieb, Verkratzen, Wasser, Lösungsmittel, Wasserdampf und Lösungsmitteldämpfe) herabzusetzen.

Das Laminat selber besteht häufig aus drei Schichten, einem gefärbten oder bedruckten Dekorpapier, einem darüberliegenden transparenten Overlaypapier und einem darunterliegenden sogenannten Kernpapier, das als Träger für das Dekorpapier und das Overlaypapier dient. Alle drei Papiere sind mit einem hitzehärtbaren Kunstharz imprägniert.

Als hitzehärtbare Kunstharze für die Herstellung von Laminaten eignen sich Phenolharze, Epoxyharze, Polyesterharze, Silikone, Diallylphthalate, Aminoplaste, Polyurethane und viele andere mehr. Besonders geeignet für die Herstellung von Dekorschichten sind Phenol-Formaldehydharze. Bevorzugt wird Melamin-Formaldehyd-Harz eingesetzt.

Da die Oberflächen von Möbeln und besonders die von Fußböden häufig sehr starken mechanischen Beanspruchungen ausgesetzt sind, wurde in der Vergangenheit immer wieder versucht, die Abriebfestigkeit des Laminats durch die Einlagerung von Hartstoffpartikeln in der Harzschicht, mit der das oberste Papier (Dekorpapier) imprägniert ist, heraufzusetzen.

Beispielhaft für eine Vielzahl von Veröffentlichungen und Patenten, die entsprechende Verfahren zur Herstellung von abriebfesten Dekorschichten bzw. Laminaten beschreiben, können die US-A-3 928 706, die EP-A-0 519 242, die US-A-5 344 705, die DE-C-195 08 797, die DE-A-196 04 907 und die WO 97/00172 genannt werden. In all diesen Veröffentlichungen werden vor allem Teilchen auf Basis von Aluminiumoxid als geeignete Hartstoffpartikel für die Herstellung von abriebfesten Dekorschichten genannt. Der bevorzugte Bereich für die mittlere Korngröße dieser Teilchen liegt dabei zwischen 1 und 150 µm.

Die US-A-3 928 706 beschreibt die Herstellung von verschleißfesten Dekorschichten, die aus einem Kernpapier, einem Dekorpapier, einer Verschleißschicht und einem Overlaypapier bestehen. Die Verschleißschicht, die aus einem hitzehärtbarem Kunstharz, einem darin fein verteiltem, wasserunlöslichem Hartstoff mit einer Härte nach Mohs von mindestens 7 und ebenfalls darin fein verteilten Cellulose-Fasern besteht, wird entweder auf eine Oberfläche des Dekor- oder des Overlaypapiers aufgebracht. Alle drei Papiere sind mit einem hitzehärtbaren Kunstharz imprägniert und werden auf die übliche Weise zu einem einheitlichen Laminat verarbeitet, indem sie bei Temperaturen von ca. 150 °C zwischen hochpolierten Pressplatten verpresst werden.

Die EP-A-0 519 242 beschreibt Verschleißschutzschichten von besonderer Klarheit und einem besonderen Erscheinungsbild, was dadurch erreicht wird, dass man das Dekorpapier mit einer Verschleißschicht versieht, die neben mit Silan ummantelten Hartstoffen ein Verdichtungsmittel und ein Gleitmittel enthalten. Die Verarbeitung zum fertigen Laminat erfolgt auf die übliche Weise durch Verpressen.

In der DE-A-196 04 907 wird ein Verfahren zur Gewinnung eines abriebfesten Blattes beschrieben, bei dem das Papier direkt bei der Herstellung, noch vor der Trocknung, mit einem Brei, der relativ grobe, abriebfeste Partikel sowie einen Binder enthält, beschichtet wird. Die durchschnittliche Partikelgröße der Hartstoffe liegt dabei zwischen 10 und 100 µm. Als Hartstoffpartikel werden Siliciumoxid, Aluminiumoxid, Alundum, Korund, Schmirgel, Spinell sowie diverse Carbide genannt.

Die WO 97/00172 beschreibt ein Verfahren, bei dem ein Overlay-Papier für die Herstellung von abriebfesten Laminaten beidseitig mit Hartstoff-Partikeln beschichtet wird.

In allen Fällen führt jedoch die Herstellung von verschleißfesten Laminatoberflächen mit Hartstoff-gefüllten Overlayoder Dekorpapieren oder auch die Direktbeschichtung mit sogenannten Hartstoff-gefüllten "Flüssig-Overlays" zu einem wesentlichen Problem bei der Endfertigung der Laminate, weil sowohl beim diskontinuierlichen Betrieb die hochpolierten Spiegeloberflächen der Pressplatten als auch beim kontinuierlichen Betrieb die Oberflächen der Pressbänder durch den Kontakt mit den Hartstoffpartikeln verkratzt und relativ schnell unbrauchbar werden. Da die Pressplatten und -bänder relativ teuer sind, ist dieser Verschleiß ein ganz wesentlicher Kostenfaktor bei der Herstellung von verschleißfesten Dekorschichten.

In der DE-C-195 08 797 versucht man das Verschleißproblem bei der Fertigung dadurch zu lösen, dass man das Dekorpapier mit einer abriebfesten Schicht versieht, ohne dabei ein entsprechend vorgefertigtes Overlaypapier durch Verpressen aufzubringen, indem man die Viskosität des Kunstharzes für die Beschichtung des Dekorpapiers so einstellt, dass das fertige Dekorpapier eine glatte, abriebfeste Schicht aufweist, aus der kein Hartstoffpartikel mehr herausragt. Eine hohe Viskosität jedoch führt zu Lufteinschlüssen und damit zu mangelnder Transparenz der Schicht. Das Problem des Verschleißes der Presswerkzeuge ist damit auch nicht gelöst, da es bei der Endfertigung unter den üblichen Pressbedingungen immer noch zum Kontakt zwischen der Spiegeloberfläche des Presswerkzeugs und dem Hartstoff kommt.

Die US-A-5 344 704 beschreibt eine Möglichkeit zur Reduzierung des Verschleißes von Presswerkzeugen dadurch, dass vorgehärtete Harzpartikel zusammen mit den Hartstoffpartikeln eingearbeitet werden. Wenn diese vorgehärteten Harzpartikel jedoch die Presswerkzeuge schützen sollen, müssen sie größer sein als die Hartstoffpartikel. Da die Harzpartikel jedoch keine ausreichende Härte besitzen, wird dadurch die Abriebfestigkeit der Verschleißschicht stark herabgesetzt. Wenn die vorgehärteten Harzpartikel dagegen gleich groß oder kleiner als die Hartstoffpartikel sind, können die Presswerkzeuge nicht mehr oder nur ungenügend geschützt werden. Ein weiterer Nachteil besteht darin, dass die üblicherweise verwendeten Melaminharze nur bei einer vollständigen Aushärtung unter Druck die für eine qualitativ hochwertige Dekorschicht erforderliche hohe Transparenz erreichen. Somit scheint sowohl die mechanische Festigkeit als auch die dekorative Wirkung problematisch zu sein.

Der Erfindung lag deshalb das Problem zugrunde, eine Verschleißschutzschicht zur Verfügung zu stellen, bei dem die Presswerkzeuge geschont werden und die damit die vorher beschriebenen Nachteile des Standes der Technik nicht aufweisen.

Diese Aufgabe wird dadurch gelöst, dass Hartstoffpartikel mit einer Härte nach Mohs von mindestens 6 zusammen mit schneidkantenfreien, runden Feststoffpartikeln in Form von kugeln mit einer Härte nach Mohs von mindestens 5 in dem Kunstharzsystem für die entsprechende Verschleißschutzschicht verarbeitet werden. Die runden Feststoffpartikel wirken dabei quasi als Abstandshalter für die Verpressung und verhindern durch ihre runde Form und die gegenüber dem Hartstoff verminderte Härte weitestgehend ein Zerkratzen der Pressplatten.

Diese Maßnahme kann ohne Einschränkung für sämtliche Verfahren zur Herstellung von Verschleißschutzschichten angewandt werden, bei denen in der Endverarbeitung ein Pressvorgang vorgesehen ist.

Um die Spiegeloberflächen der Presswerkzeuge besonders wirksam zu schonen, ist es vorteilhaft, wenn es sich bei den runden Feststoffpartikeln um Vollkugeln aus Glas handelt, die je nach Einsatzgebiet für die Verschleißschutzschicht hochtransparent (z.B. für Dekorschichten) oder hochreflektierend sein können (z.B. für Sicherheitsmarkierungen). Als Hartstoff wird bevorzugt Schmelzkorund eingesetzt. Natürlich ist es auch möglich je nach Bedarf, sämtliche anderen aus der Literatur bekannten Hartstoffe für Verschleißschutzschichten in Kombination mit den erfindungsgemäßen runden Feststoffpartikeln einzusetzen.

Die mittlere Korngröße für die Hartstoffe sowie die Feststoffpartikel liegt zwischen 1 und 150 µm, bevorzugt im Bereich zwischen 1 und 100 µm, und besonders bevorzugt im Bereich zwischen 1 und 70 µm.

Üblicherweise werden Feststoffpartikel, wie z.B. Glaskugeln, jedoch nicht monodispers, sondern mit einer bestimmten Korngrößenverteilung geliefert. Um einen tatsächlichen Schutz für die Spiegeloberflächen der Presswerkzeuge unter Beibehaltung der positiven Eigenschaften der Verschleißschutzschicht zu gewährleisten, sollte daher die Korngrößenverteilung der Feststoffpartikel mindestens beim kleinsten Korndurchmesser der Hartstoffe beginnen und maximal beim 5-fachen Wert des größten Korndurchmessers der Hartstoffpartikel enden und der mittlere Korndurchmesser der Feststoffpartikel sollte größer sein als der mittlere Korndurchmesser der Hartstoffpartikel. Als besonders günstig hat sich herausgestellt, wenn die Kornverteilung der Feststoffpartikel im Bereich des 1-fachen bis 1.5-fachen Wert des größten Korndurchmessers der Hartstoffpartikel liegt. Der Idealfall wird dann erreicht, wenn die Feststoffpartikel monodispers verteilt sind und den 1.2-fachen Wert des größten Korndurchmessers der Hartstoffpartikel besitzen.

Je nach gewünschtem Effekt kann der Anteil an Feststoffpartikeln in einem breiten Bereich von 0.1 bis 99.9 Vol.-%, bezogen auf den Gesamtvolumen an Partikeln (Hartstoffpartikel + runde Feststoffpartikel), variieren. Eine gute Abriebfestigkeit, kombiniert mit einem deutlich reduzierten Verschleiß der Presswerkzeuge findet man in einem Bereich zwischen 5 und 40 Vol.-%, bezogen auf das Gesamtvolumen an Partikeln. Besonders günstige Verhältnisse liegen in dem Bereich zwischen 10 und 30 Vol.-%, bezogen auf das Gesamtvolumen an Partikeln, vor.

Die Herstellung der erfindungsgemäßen Verschleißschutzschicht erfolgt gemäß den bekannten, dem Stand der Technik entsprechenden Verfahren zur Herstellung von Verschleißschutzschichten. So können beispielsweise Verschleißsschutzschichten durch Auftragen einer erfindungsgemäßen Suspension aus Kunstharz, Hartstoffpartikeln und runden Feststoffpartikeln erhalten werden. Eine weitere Möglichkeit besteht darin, dass ein mit Hartstoffen und runden Feststoffpartikeln gefülltes Overlay-Papier mit Kunstharz getränkt und anschließend verpresst wird.

Typische Anwendungen für die erfindungsgemäße Verschleißschutzschicht sind abriebfeste Kunststoffoberflächen, Laminatfußböden, Arbeitsplatten, Möbelplatten und ähnliches. Eine besondere Ausführungsform der Erfindung betrifft Laminatfußböden oder Fußbodensegmente mit reflektierenden Oberflächen als Sicherheitsmarkierungen.

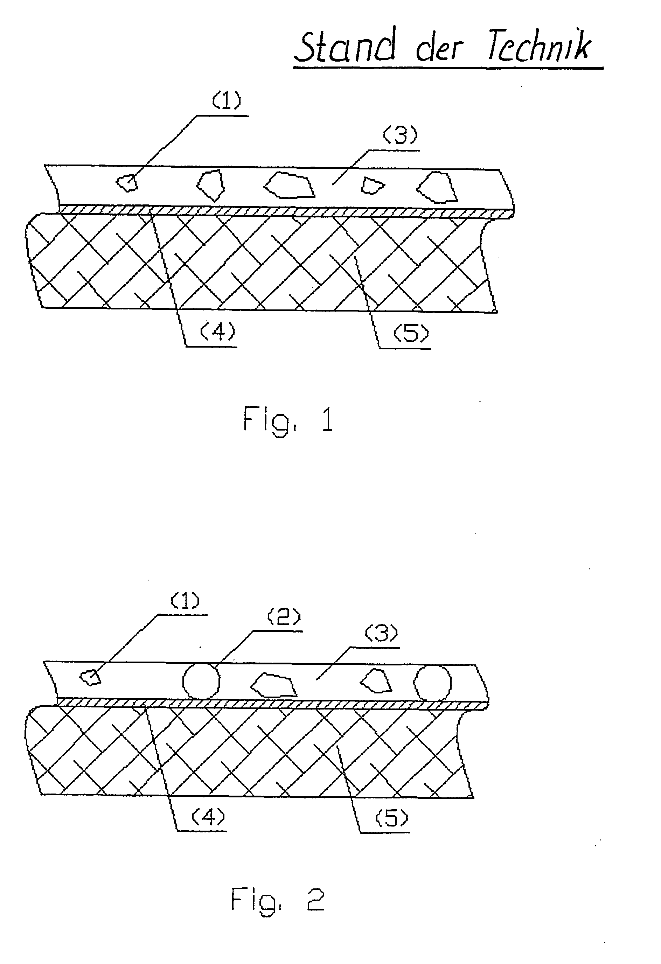

Die Erfindung ist nachstehend näher anhand der Figuren 1 und 2 erläutert, wobei die Figur 1 eine Verschleißschutzschicht nach dem Stand der Technik mit eingelagerten Hartstoffen und die Figur 2 die erfindungsgemäße Verschleißschutzschicht mit eingelagerten Hartstoffen und runden Feststoffpartikeln wiedergibt.

Liste der in den Figuren verwendeten Bezugszeichen:
1 Hartstoffpartikel
2 runde Feststoffpartikel
3 Harzschicht
4 Dekorpapier
5 Mitteldichte Faserplatte (MDF)

Im folgenden wird die Erfindung anhand von Beispielen näher erläutert, ohne dass darin eine Einschränkung zu sehen ist.

### Beispiele

Nach dem bekannten Stand der Technik wurde eine MDF-Platte (mitteldichte Holzfaserplatte) mit einem mit Melamin-Formaldehydharz getränkten Dekorpapier beschichtet und bei 120 °C getrocknet.

Auf dieser mit Dekorpapier vorbeschichteten MDF-Platte wurde abschließend eine Verschleißschutzschicht wie folgt erzeugt:

### Vergleichsbeispiel 1

Eine aus Melamin-Formaldehydharz und Hartstoffpartikeln bestehende Suspension wurde aufgetragen und bei 120°C getrocknet. Als Hartstoffpartikel wurde Edelkorund Weiß (Alodur ZWSK, Härte nach Mohs 9, Fa. Treibacher Schleifmittel AG) in der Körnung F240 (nach FEPA) verwendet. Die Korngrößenverteilung des Edelkorundes F240, gemessen mit Sedimentationsverfahren nach FEPA Standard, betrug: 3 % = 66 µm, 50 % = 45 µm und 94 % = 31 µm.

Der Anteil Edelkorund ZWSK F240 in der erzeugten Verschleißschutzschicht betrug ca. 10 g / m².

### Beispiel 2

Eine aus Melamin-Formaldehydharz, Hartstoffpartikeln und runden Feststoffpartikeln bestehende Suspension wurde aufgetragen und bei 120°C getrocknet. Als Hartstoffpartikel für die Suspension wurde Edelkorund Weiss nach Vergleichsbeispiel 1 zusammen mit den runden Feststoffpartikeln (Glasstrahlperlen der Fa. Swaco Vestglas) in nachfolgender Abmischung und Korngrößenrelation eingesetzt:
75 Vol.-% Edelkorund WSK F240 (gemäß Vergleichsbeispiel 1) und
25 Vol.-% Glasstrahlperlen (Fa. Swarco Vestglas, Körnung 80 - 100 µm).

Die Glasperlen mit definierter Korngröße von 80 - 100 µm wurden vorher durch Sieben gezielt hergestellt.

Technische Daten der Glasstrahlperlen: Gehärtetes, bleifreies Natronglas, Härte nach Mohs ca. 6 - 7, Härte nach Rockwell ca. 46, spezifisches Gewicht ca. 2.5 g/cm³, Schüttgewicht ca. 1.5 kg/l.

Der Anteil der Mischung Edelkorund und Glasperlen in der erzeugten Verschleißschutzschicht betrug wie in Beispiel 1 ca. 10 g/m².

### Beispiel 3

Das Vorgehen erfolgte analog zu Beispiel 2. Die Mischung Edelkorund Korn F240 und Glasperlen 80 - 100 µm, wurde jedoch vor dem Einsatz mit einer Polydimethylsiloxan/Öl-Emulsion (Fa. Bayer, Baysilone Öl-Emulsion H) wie folgt beschichtet:

12 ml der Emulsion H wurden mit 8 ml entsalztem Wasser vermischt und dann zu 1 kg eines Gemisches aus Edelkorund und Glasperlen (75 : 25) gegeben und sorgfältig vermischt. Diese Mischung wurde anschließend bei 200 °C im Trockenschrank getrocknet und dann auf Raumtemperatur abgekühlt.

### Ermittlung des Pressplattenverschleißes

Die gemäß Vergleichsbeispiel 1, Beispiel 2 und Beispiel 3 hergestellten dekorativen und mit einer Verschleißchutzschicht versehenen MDF-Platten wurden zur endgültigen Aushärtung und zur Erzielung einer hohen Transparenz bei einer Temperatur von 150°C verpresst. Der Pressdruck betrug 14 bar, die Presszeit ca. 10 Sekunden. Für den Pressvorgang wurde jeweils eine unbenutzte hochglänzende Metallpressplatte (Spiegeloberfläche) verwendet. Es wurde die Anzahl an Verpressungen ermittelt, die möglich war, bis die Pressplatte durch zunehmenden Verschleiß (Kratzer, Krater, Mattierung) keine hochglänzende fehlerfreie MDF Oberflächen mehr erzeugte.

Die Anzahl der erzielten Verpressungen zeigt die nachfolgende Zusammenstellung:

**Tabelle 1:**

| Pressplatten-Verschleiß | |
|---|---|
| MDF-Platte | Anzahl der Verpressungen |
| Vergleichsbeispiel 1: | ca. 3.200 |
| Beispiel 2: | |
| ca. 4.700 | |
| Beispiel 3: | |
| ca. 4.900 | |

### Beispiel 4

Es wurde wie in Beispiel 2 verfahren. Die Mischung Edelkorund und Glasperlen wurde jedoch aus 30 Vol.-% Edelkorund und 70 Vol.-% Glasperlen hergestellt, wobei anstelle der transparenten Glasstrahlperlen jedoch reflektierende Glaskugeln (Typ: Swarcolux, ca. 100 micron, Fa. Swarco Vestglas) eingesetzt wurden.

Erwartungsgemäß verminderte sich in diesem Beispiel die Abriebfestigkeit der Oberfläche, jedoch wurde eine Zunahme des Reflektionsgrades der Oberfläche festgestellt

## Patentansprüche

1. Verschleißschutzschicht auf Basis von Kunstharz mit eingelagerten Hartstoffpartikeln, wobei die Hartstoffpartikel eine Härte nach Mohs von mindestens 6 aufweisen, **dadurch gekennzeichnet, dass** zusätzlich in der Schicht weitere kompakte und im wesentlichen schneidkantenfreie, runde Feststoffpartikel in Form von Kugeln mit einer Harte nach Mohs von mindestens 5 enthalten sind, wobei die Korngrößenverteilung der runden Feststoffpartikel mindestens beim kleinsten Korndurchmesser der Hartstoffpartikel beginnt und maximal beim fünffachen Wert des größten Hartstoffpartikeldurchmessers endet und der mittlere Korndurchmesser der Feststoffpartikel größer ist als der mittlere Korndurchmesser der Hartstoffpartikel.

2. Verschleißschutzschicht gemäß Anspruch 1, **dadurch gekennzeichnet, dass** die Kornverteilung der Feststoffpartikel im Bereich des größten Korndurchmessers der Hartstoffpartikel beginnt und beim 1.5-fachen Wert des größten Korndurchmessers der Hartstoffpartikel endet.

3. Verschleißschutzschicht gemäß einem oder mehrere der Ansprüche 1 und 2, **dadurch gekennzeichnet, dass** die Feststoffpartikel monodispers verteilt sind und einen mittleren Durchmesser besitzen, der beim ca. 1.2-fachen Wert des größten Korndurchmessers der Hartstoffpartikel liegt.

4. Verschleißschutzschicht gemäß einem oder mehreren der Ansprüche 1 bis 3 **dadurch gekennzeichnet, dass** die Feststoffpartikel gefüllte hochtransparente Glaskugeln / -perlen sind.

5. Verschleißschutzschicht gemäß einem oder mehreren der Ansprüche 1 bis 4, **dadurch gekennzeichnet, dass** die Feststoffpartikel gefüllte hochreflektierende Glaskugeln / - perlen sind.

6. Verschleißschutzschicht gemäß einem oder mehreren der Ansprüche 1 bis 6, **dadurch gekennzeichnet, dass** der Volumenanteil der Feststoffpartikel 0.1 Vol.-% bis 99.9 Vol.-%, bevorzugt 5 Vol.-% bis 40 Vol.-%, und besonders bevorzugt 10 Vol.-% bis 30 Vol.-%, bezogen auf das Gesamtvolumen an Feststoffpartikeln (Hartstoffpartikel + Feststoffpartikel), beträgt.

7. Mischung aus Hartstoffpartikeln und Festoffpartikeln für die Herstellung einer Verschleißschutzschicht gemäß einem oder mehreren der Ansprüche 1 bis 6.

8. Verfahren zur Herstellung einer Verschleißschutzschicht gemäß einem oder mehreren der Ansprüche 1 bis 6 durch direktes Auftragen einer homogenen Suspension von Hartstoffpartikeln und Feststoffpartikeln in Kunstharz.

9. Verfahren zur Herstellung einer Verschleißschutzschicht gemäß einem oder mehreren der Ansprüche 1 bis 6, wobei zunächst ein mit Hartstoffen und Feststoffpartikeln gefülltes Overlaypapier mit Kunstharz getränkt und anschließend auf eine Oberfläche verpresst wird.

10. Verwendung einer Verschleißschutzschicht gemäß einem oder mehreren der Ansprüche 1 bis 6 zur Herstellung von abriebfesten Kunststoffoberflächen, Laminatfußböden, Arbeitsplatten und Möbelplatten.

11. Verwendung einer Verschleißschutzschicht gemäß einem oder mehreren der Ansprüche 1, 2 und 4 bis 6 zur Herstellung von abriebfesten Kunststoffoberflächen, Laminatfußböden und Fußbodensegmenten mit reflektierenden Oberflächen als Sicherheitsmarkierungen.

## Claims

1. A layer for protection against wear on a base of artificial resin with embedded hard solids particles, wherein the hard solids particles have a Moh hardness of at least 6,
**characterised in that** additionally other compact, round solids particles without rough edges and in the form of balls with a Moh hardness of at least 5 are contained in the layer, wherein the particle-size distribution of the round solids particles begins at least with the smallest particle diameter of the hard solids particles and ends at most at five times the value of the largest hard solids diameter and the average particle diameter of the solids particles is greater than the average particle diameter of the hard solids particles.

2. A layer for protection against wear according to Claim 1,
**characterised in that** the particle-size distribution of the solids particles begins in the range of the largest particle diameter of the hard solids particles and ends with the 1.5 times value of the largest particle diameter of the hard solids particles.

3. A layer for protection against wear according to one or more of Claims 1 and 2,
**characterised in that** the solids particles are distributed monodispersely and have an average diameter which lies at roughly 1.2 times the value of the largest particle diameter of the hard solids particles.

4. A layer for protection against wear according to one or more of Claims 1 to 3,
**characterised in that** the solids particles are filled, highly transparent glass balls/beads.

5. A layer for protection against wear according to one or more of Claims 1 to 4,
**characterised in that** the solids particles are filled, highly reflective glass balls/beads.

6. A layer for protection against wear according to one or more of Claims 1 to 6,
**characterised in that** the volume percentage of the solids particles is 0.1 % by volume to 99.0 % by volume, preferably 5 % by volume to 40 % by volume, and particularly preferably 10 % by volume to 30 % by volume, related to the overall volume of solids particles (hard solids particles + solids particles).

7. A mixture consisting of hard solids particles and solids particles for the manufacture of a layer for protection against wear according to one or more of Claims 1 to 6.

8. A method for the manufacture of a layer for protection against wear according to one or more of Claims 1 to 6 by the direct application of a homogenous suspension of hard solids particles and solids particles in artificial resin.

9. A method for the manufacture of a layer for protection against wear according to one or more of Claims 1 to 6, whereby at first an overlay paper filled with hard solids and solids particles is impregnated with artificial resin and is then pressed onto a surface.

10. Use of a layer for protection against wear according to one or more of Claims 1 to 6 for the manufacture of abrasion-proof plastic surfaces, laminate floors, worktops and furniture panels.

11. Use of a layer for protection against wear according to one or more of Claims 1, 2 and 4 to 6 for the manufacture of abrasion-proof plastic surfaces, laminate floors and floor segments with reflective surfaces as safety markings.

## Revendications

1. Couche de protection contre l'usure à base de résine synthétique enfermant des particules de substance dure, dans laquelle les particules de substance dure présentent une dureté selon Mohs d'au moins 6,
**caractérisée en ce que**
d'autres particules solides, rondes, essentiellement sans arête coupante et compactes, en forme de billes présentant une dureté selon Mohs de 5 sont en outre contenues dans la couche, la répartition granulométrique des particules solides démarrant au moins avec le plus petit diamètre de particule de substance dure et se terminant au maximum à une valeur de 5 fois le diamètre de particule le plus important des particules de substance dure, et le diamètre granulométrique intermédiaire des particules solides étant supérieur au diamètre granulométrique intermédiaire de la substance dure.

2. Couche de protection contre l'usure selon la revendication 1,
**caractérisée en ce que**
la répartition granulométrique des particules solides démarre dans la plage du diamètre de particule de substance dure le plus important et se termine avec une valeur de 1,5 fois le diamètre de particule le plus important des particules de substance dure.

3. Couche de protection contre l'usure selon l'une quelconque ou plusieurs des revendications 1 ou 2,
**caractérisée en ce que**
les particules solides sont réparties de façon monodispersée et possèdent un diamètre intermédiaire, qui a une valeur de 1,2 fois environ le diamètre le plus élevé des particules de substance dure.

4. Couche de protection contre l'usure selon l'une quelconque ou plusieurs des revendications 1 à 3,
**caractérisée en ce que**
les particules solides sont des billes/perles en verre pleines extrêmement transparentes.

5. Couche de protection contre l'usure selon l'une quelconque ou plusieurs des revendications 1 à 4,
**caractérisée en ce que**
les particules solides sont des billes/perles en verre pleines extrêmement réfléchissantes.

6. Couche de protection contre l'usure selon l'une quelconque ou plusieurs des revendications 1 à 6,
**caractérisée en ce que**
la proportion en volumes de particules solides s'élève de 0,1 % en volume à 99,9 % en volume, de préférence de 5% en volume à 40 % en volume et de manière préférée de 10 % en volume à 30 % en volume rapporté au volume global en particules solides (particules de substance dure + particules solides).

7. Mélange de particules de substance dure et de particules solides pour la fabrication d'une couche résistant à l'usure selon l'une quelconque ou plusieurs des revendications 1 à 6.

8. Procédé pour la fabrication d'une couche de protection contre l'usure selon l'une quelconque ou plusieurs des revendications 1 à 6, par l'application directe d'une suspension homogène de particules de substances dure et de particules solides en résine synthétique.

9. Procédé pour la fabrication d'une couche de protection contre l'usure selon l'une quelconque ou plusieurs des revendications 1 à 6,
selon lequel
un papier Overlay contenant une substance dure et des particules solides est d'abord imbibé d'une résine synthétique et ensuite compressé.

10. Utilisation d'une couche de protection contre l'usure selon l'une quelconque ou plusieurs des revendications 1 à 6, pour la fabrication de surfaces en plastique résistant à l'usure par abrasion, de plancher en laminé, de plan de travail et de pans de meuble.

11. Utilisation d'une couche de protection contre l'usure selon l'une quelconque ou plusieurs des revendications 1, 2 et 4 à 6, pour la fabrication de surfaces en matière plastique résistant à l'usure par abrasion, un plancher en laminé ou des segments de plancher présentant une surface réfléchissante sous la forme de marquages de sécurité.
